(19) **Europäisches Patentamt / European Patent Office / Office européen des brevets**

(11) **EP 2 105 839 A1**

(12) # EUROPEAN PATENT APPLICATION
published in accordance with Art. 153(4) EPC

(43) Date of publication:
**30.09.2009 Bulletin 2009/40**

(51) Int Cl.:
***G06F 13/00*** *(2006.01)*

(21) Application number: **07706847.6**

(22) Date of filing: **16.01.2007**

(86) International application number:
**PCT/JP2007/050520**

(87) International publication number:
**WO 2008/087713 (24.07.2008 Gazette 2008/30)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **Mitsubishi Electric Corporation
Chiyoda-ku
Tokyo 100-8310 (JP)**

(72) Inventors:
 • **IMAI, Shigeru**
 **Tokyo 100-8310 (JP)**
 • **HANADA, Takehiko**
 **Tokyo 100-8310 (JP)**

 • **MIURA, Shin**
 **Tokyo 100-8310 (JP)**
 • **MATSUBARA, Masami**
 **Tokyo 100-8310 (JP)**
 • **AKATSU, Shinji**
 **Tokyo 100-8310 (JP)**

(74) Representative: **Gleiter, Hermann
Pfenning, Meinig & Partner GbR
Patent- und Rechtsanwälte
Theresienhöhe 13
80339 München (DE)**

(54) **CLIENT TERMINAL, APPLICATION PROVIDING SERVER, AND APPLICATION PROVIDING SYSTEM**

(57) A client terminal that compares information for defining a service provided by an on-premise terminal with information for defining the service processing capability of the client terminal itself so as to extract an acquiring condition for acquiring an application which is executed when using the service, acquires meta information from an application providing server on the basis of the application acquiring condition, and acquires an application binary specified on the basis of the meta information from the application providing server.

FIG. 1

EP 2 105 839 A1

## Description

Field of the Invention

The present invention relates to a client terminal that, according to the functions of each terminal available on a network, can select an application using these functions and a user interface easily, an application providing server that provides an application, and an application providing system equipped with the client terminal and the application providing server.

Background of the Invention

For example, after a data relay apparatus disclosed by the patent reference 1 examines functions which a terminal connected to an on-premise network provides, the data relay apparatus lists implementable services from the functions according to a service ledger which the data relay apparatus holds, and notifies the services to the user.

When the data relay apparatus receives a selection of a service which the user uses from the user who has received the notification and the user then selects service, the data relay apparatus makes a setting for each terminal having a function which constructs this service. As a result, the user can use the selected service.

Because the data relay apparatus thus presents a service using the function of each terminal on the network to the user, and the user who has received the presentation can use a service selected thereby promptly, the user can use the service easily without having to have complicated knowledge for making settings for each terminal.

In addition, this data relay apparatus acquires data about an update of the service ledger from a terminal connected to the off-premise network, newly lists implementable services according to the acquired update data, and notifies them to the user. As a result, the data relay apparatus can use a new service by acquiring a new service ledger from the off-premise network.

[Patent reference 1] JP,2000-332811,A

Conventionally, the user can use a service as a combination of functions provided by on-premise terminal connected to the on-premise network. A problem is, however, that when using a service, the user has no alternative but to use an application and a user interface which are made available in advance on an on-premise terminal.

The present invention is made in order to solve the above-mentioned problem, and it is therefore an object of the present invention to provide a client terminal, an application providing server, and an application providing system which, when using services provided by an on-premise terminal connected to an on-premise network, can select an application and a user interface to be executed when using these service according to a user's liking without limiting the application and the user interface to those which are made available in advance in an on-premise terminal, and execute the application and the user interface.

Disclosure of the Invention

A client terminal in accordance with the present invention acquires terminal information including information for defining a service provided by an on-premise terminal connected to an on-premise network from the on-premise terminal, compares the terminal information with information for defining a service processing capability of the client terminal itself so as to, from these pieces of information, extract an acquiring condition for acquiring an application which is executed when using the service provided by the on-premise terminal on the client terminal itself, and acquires meta information about the application from an application providing server on an off-premise network on the basis of the application acquiring condition and also acquires a main part of the application specified on the basis of the meta information from the application providing server on the off-premise network.

Therefore, the present invention provided an advantage of being able to easily select an application using a service function provided by each on-premise terminal on the on-premise network, and execute the application.

Brief Description of the Figures

[Fig. 1] Fig. 1 is a block diagram showing the structure of an application providing system in accordance with Embodiment 1 of the present invention;
[Fig. 2] Fig. 2 is a sequence diagram showing a flow of the operation of the application providing system of Embodiment 1;

[Fig. 3] Fig. 3 is a figure showing examples of the terminal information about an on-premise terminal;

[Fig. 4] Fig. 4 is a figure showing an example of a client terminal capability managed by a terminal capability matching unit;

[Fig. 5] Fig. 5 is a figure showing an example of an application acquiring condition;

[Fig. 6] Fig. 6 is a flow chart showing a flow of a terminal capability matching process;

[Fig. 7] Fig. 7 is a figure showing an example of a request for examination of application metadata;

[Fig. 8] Fig. 8 is a figure showing an example of application meta information;

[Fig. 9] Fig. 9 is a figure showing an example of an application metadata search response;

[Fig. 10] Fig. 10 is a figure showing an example of a GUI for application selection;

[Fig. 11] Fig. 11 is a figure showing a request for acquisition of application binary;

[Fig. 12] Fig. 12 is a figure showing an application binary acquisition response;

[Fig. 13] Fig. 13 is a figure showing a GUI screen displayed by the execution of an application binary;

[Fig. 14] Fig. 14 is a block diagram showing the structure of an application providing system in accordance with Embodiment 2 of the present invention;

[Fig. 15] Fig. 15 is a sequence diagram showing a flow of the operation of the application providing system of Embodiment 2; and

[Fig. 16] Fig. 16 is a figure showing examples of the terminal information of an on-premise terminal in accordance with Embodiment 2.

Preferred Embodiments of the Invention

Hereafter, in order to explain this invention in greater detail, the preferred embodiments of the present invention will be described with reference to the accompanying drawings. Embodiment 1.

First, terms used in the present invention will be defined.

A service used in the present invention means a function which either of an on-premise terminal and an information providing server provides for equipment disposed outside the on-premise terminal or the information providing server, and input and output are defined for each service. An application used in the present invention means application software that operates on a client terminal, and operates by using a service as mentioned above and an API (Application Program Interface) predefined in order to control the client terminal. Particularly, a "main part of an application" shows software which is executed as the application, and "application meta information" shows additional information in which the attributes of an application, such as an application name and an explanation about the application, are described.

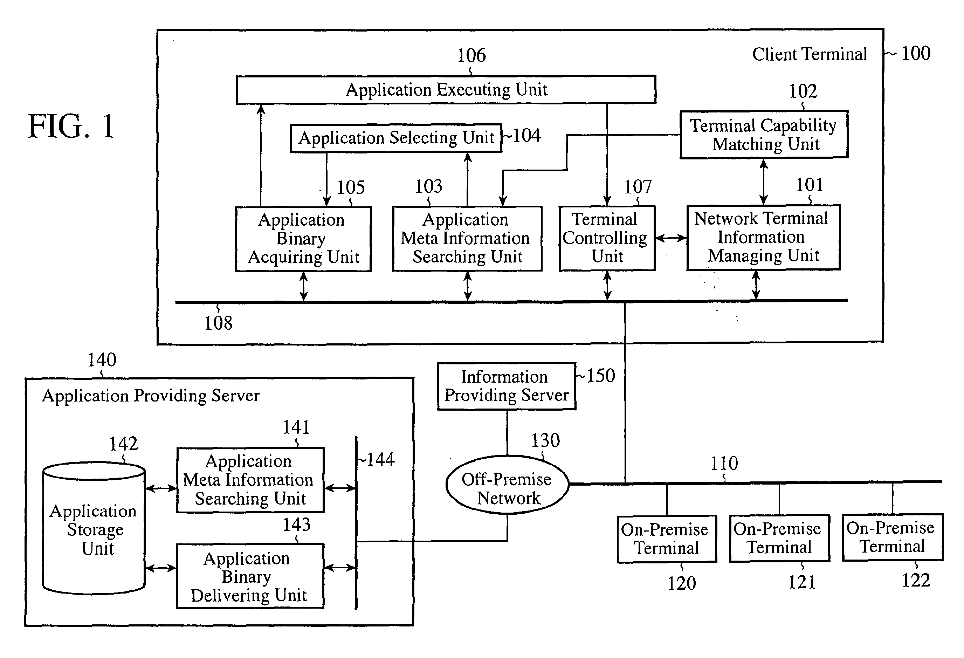

Fig. 1 is a block diagram showing the structure of an application providing system in accordance with Embodiment 1 of the present invention. In Fig. 1, the application providing system in accordance with Embodiment 1 is provided with a client terminal 100, on-premise terminals 120 to 122, an application providing server 140, and an information providing server 150. The client terminal 100 is connected to an on-premise network 110, and the on-premise terminals 120 to 122 are also connected to this on-premise network 110.

An off-premise network 130 is constructed in such a way as to be able to accept access from the on-premise network 110. The application providing server 140 provides an application executable on the client terminal 100 for the client terminal. The information providing server 150 is connected to the off-premise network 130, and provides information for an application which is executed on the client terminal 100.

The client terminal 100 is constructed in such a way as to include the following functional blocks: a network terminal information managing unit 101, a terminal capability matching unit 102, an application meta information acquiring unit 103, an application selecting unit 104, an application binary acquiring unit 105, an application executing unit 106, a terminal controlling unit 107, and a network IF 108.

The network terminal information managing unit 101 acquires and manages terminal information about another on-premise terminal on the on-premise network 110. The terminal capability matching unit 102 compares the capability of the client terminal 100 itself with the terminal information about the other on-premise terminal which the network terminal information managing unit 101 has acquired so as to extract an acquiring condition for acquiring an application. The application meta information acquiring unit 103 acquires the meta information about applications from the application providing server 140 on the basis of the acquiring condition which the terminal capability matching unit 102 has extracted.

The application selecting unit 104 presents the acquired application meta information to the user, and accepts a selection of an application from the user. The application binary acquiring unit 105 acquires the application binary of the application which is selected by the user. The application executing unit 106 executes the application which is acquired by the application binary acquiring unit 105. The terminal controlling unit 107 controls the operation of the client terminal 100 and those of the on-premise terminals 120 to 122 according to an instruction from the application executing unit 106.

The network IF 108 interfaces between each of the network terminal information managing unit 101, the application meta information acquiring unit 103, the application binary acquiring unit 105 and the terminal controlling unit 107, and the on-premise network 110 when they communicate with each other. In subsequent explanation, though not particularly described, it is assumed that communications between the client terminal 100 and each of the on-premise terminals 120 to 122, the application providing server 140 and the information providing server 150 are all carried out via the network IF 108.

The application providing server 140 is constructed in such a way as to have the following functional blocks: an application meta information searching unit 141, an application storage unit 142, an application binary delivering unit 143, and a network IF 144.

The application meta information searching unit 141 accepts a request for acquisition of the meta information about an application from the client terminal 100, searches for the application meta information which the application meta information searching unit 141 needs to acquire from the application storage unit 142 on the basis of a specified application acquiring condition, and delivers the meta information which the application meta information searching unit has found to the client terminal 100.

The application storage unit 142 manages the application binaries of applications and pieces of meta information respectively related with the application binaries. The application binary delivering unit 143 acquires the application binary which is specified by the client terminal 100 from the application storage unit 142, and delivers the application binary to the client terminal 100.

The network IF 144 interfaces between the application meta information searching unit 141 and the application binary delivering unit 143 when they communicate with each other via the off-premise network 130. In subsequent explanation, though not particularly described, communications between the application providing server 140 and the client terminal 100 are all carried out via the network IF 144.

Next, the operation of the application providing system will be explained.

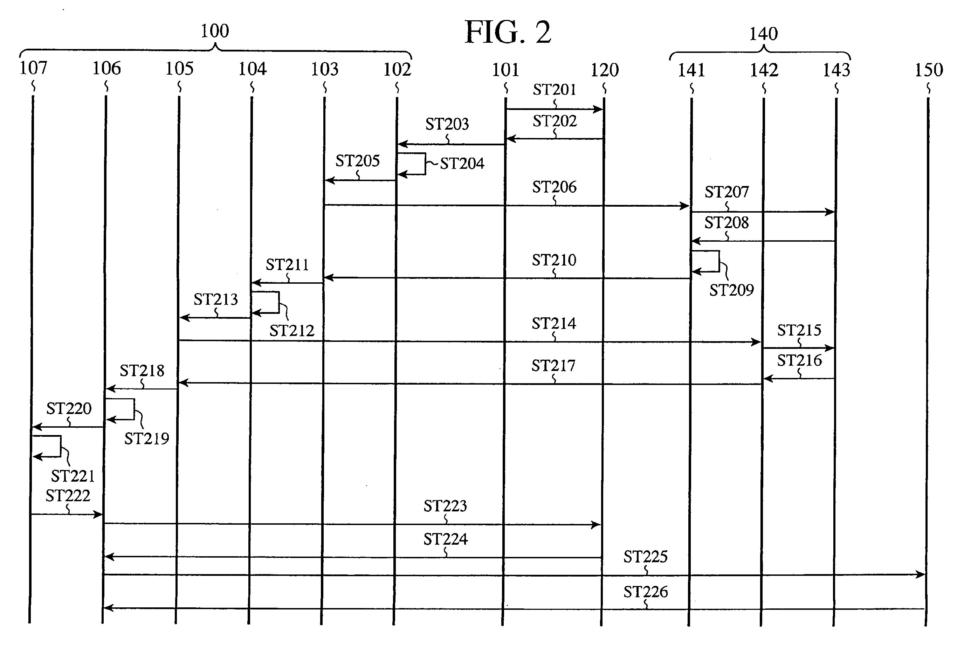

Fig. 2 is a sequence diagram showing a flow of the operation of the application providing system in accordance with Embodiment 1, and an explanation of the operation will be made with reference to this figure.

The network information terminal managing unit 101 of the client terminal 100 confirms whether there exists an on-premise terminal on the on-premise network 110, transmits a request for acquisition of terminal information to an on-premise terminal the existence of which has been confirmed thereby (step ST201) and receives the terminal information about this on-premise terminal, as a response to the request, from the on-premise terminal (step ST202).

As a method of confirming whether there exists an on-premise terminal on the on-premise network 110, the network information terminal managing unit uses a method of confirming whether there exists an on-premise terminal in response to a request from a user, a method of confirming whether there exists an on-premise terminal at regular time intervals, or a method of confirming whether there exists an on-premise terminal in response to an event notification indicating the existence of an on-premise terminal on the on-premise network 110 which the on-premise terminal has sent out.

In the example of Fig. 2, a case in which the client terminal transmits a request for acquisition of terminal information to only the on-premise terminal 120, and then acquires the terminal information about the on-premise terminal 120 from the on-premise terminal is shown. The client terminal can also acquire the terminal information about each of the other on-premise terminals 121 and 122 by repeatedly carrying out the processes of steps ST201 and ST202 for the other on-premise terminals 121 and 122.

Hereafter, the terminal information about an on-premise terminal will be explained.

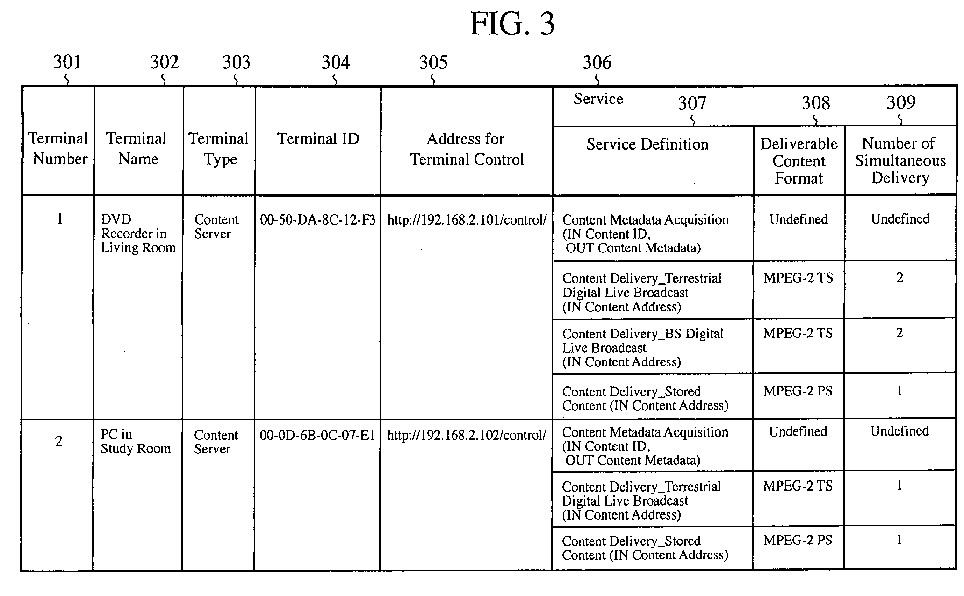

Fig. 3 is a figure showing examples of the terminal information about an on-premise terminal. In Fig. 3, the terminal information about an on-premise terminal is comprised of the following items: a terminal number 301, a terminal name 302, a terminal type 303, a terminal ID 304, an address 305 for terminal control, and services 306. Furthermore, each of the services 306 includes a service definition 307, a deliverable content format 308, and a number of simultaneous delivery 309.

The terminal number 301 of an on-premise terminal is the one for inner management which the network terminal information managing unit 101 uses. The terminal name 302 of an on-premise terminal is information for defining the name of the on-premise terminal. The terminal type 303 of an on-premise terminal is information for defining the functional type of the on-premise terminal, and shows a content server in the example of Fig. 3. The terminal ID 304 of an on-premise terminal is ID information for identifying the on-premise terminal uniquely in the on-premise network 110.

The address 305 for terminal control of an on-premise terminal is address information about an address assigned to the on-premise terminal on the network. A service provided by an on-premise terminal is set to each of the services 306 of the on-premise terminal. A concrete service name, parameters which are required when using the service, etc. are defined in the service definition 307 of an on-premise terminal.

The format of a deliverable content which is brought into correspondence with a content delivery service is set to the deliverable content format 308 of an on-premise terminal. A number of simultaneous delivery indicating how many maximum pieces of information in a format defined by the deliverable content format 308 can be delivered simultaneously is set to the number of simultaneous delivery 309 of an on-premise terminal.

The terminal IDs 304 shown in Fig. 3 are an example in a case in which the network IF 108 complies with Ethernet (registered trademark), and in this case a MAC (Media Access Control) address specific to hardware which constructs the network IF 108 is used as the terminal ID of an on-premise terminal. Furthermore, the addresses 305 for terminal control are an example in which each on-premise terminal is controlled by using HTTP (Hyper Text Transfer Protocol).

The client terminal 100 can use a service shown by the services 306, and, when desiring to use the service, can use the service by transmitting an HTTP message to the address specified by the corresponding address 305 for terminal control after setting appropriate parameters to the service defined by the service definition 307.

In each of the plurality of services described in the services 306 of an on-premise terminal, the parameters are divided by a comma and listed within the parenthesis following the service name, and the parameter described starting from IN is an input and the parameter described starting from OUT is an output. When using a service, the client terminal sets a desired parameter to the IN parameter of the service and then acquires the output described in the OUT as a response of the service.

As the pieces of terminal information shown in Fig. 3, information about a DVD recorder placed in a living room which is an on-premise terminal whose terminal number 301 is "1", and information about a PC placed in a study room which is an on-premise terminal whose terminal number 301 is "2" are shown. Both these two on-premise terminals are the ones of "content server" type each of which delivers a video by using a streaming technique, and the following four types of services in total are defined in the service definitions 307 of the on-premise terminals.

(1) Content metadata acquisition
(2) Content delivery_terrestrial digital live broadcast
(3) Content delivery_BS digital live broadcast
(4) Content delivery_stored content

When using one of these services, the client terminal 100 acquires the metadata about a content by using the content metadata acquisition service (1) first, and then provides a content address included in the metadata to the corresponding one of the content delivery services (2), (3), and (4). As a result, the client terminal can use the streaming of each content. The content delivery services (2) and (3) are the ones each of which delivers a stream of a live broadcast currently being broadcast, and the content delivery service (4) is the one which delivers the streaming of a content prestored in the terminal.

Furthermore, for example, in the services 306 of the DVD recorder whose terminal number 301 is "1", the deliverable content format 308 of the "content delivery_terrestrial digital live broadcast" service is described as "MPEG-2 TS" and the number of simultaneous delivery 309 is described as "2". These pieces of information show that two independent channels of a stream in the MPEG-2 TS format of a live broadcast currently being broadcast can be delivered in terrestrial digital broadcasting.

Referring again to the explanation about Fig. 2, the network information managing unit 101 notifies the terminal capability matching unit 102, as well as the updated terminal information, that the terminal information has been updated (step ST203). The terminal capability matching unit 102 manages the capability of the client terminal 100 which is defined to include the software and the hardware, and compares the terminal capability which the terminal capability matching unit has managed with the terminal information about a terminal on the on-premise network 110 which is notified thereto by the network terminal information managing unit 101 to perform a matching process of judging which service the client terminal can use (step ST204).

Hereafter, client terminal capability information indicating the capability of the client terminal 100, which is managed by the terminal capability matching unit 102, will be explained.

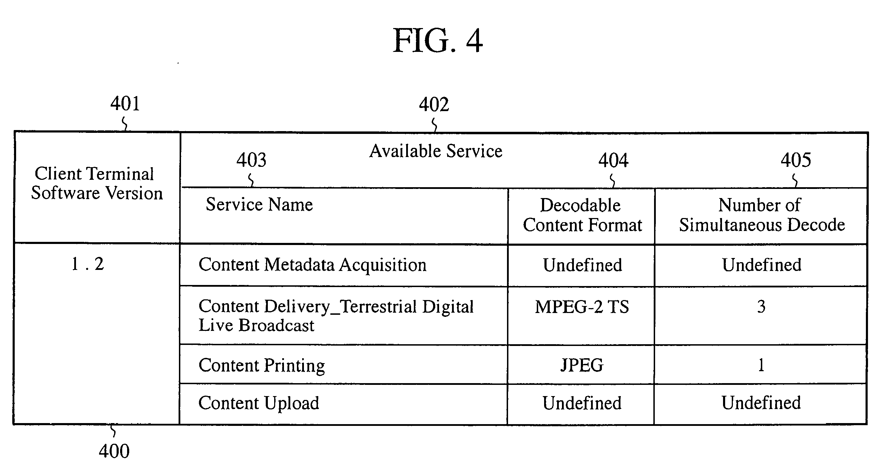

Fig. 4 is a figure showing an example of the client terminal capability information managed by the terminal capability matching unit. In Fig. 4, the client terminal capability information 400 is roughly divided into the following items: a client terminal software version 401 and some available services 402. Furthermore, each of the available services 402 is comprised of a plurality of pieces of information about the following items: a service name 403, a decodable content format 404, a number of simultaneous decode 405.

The client terminal software version 401 is a version number of a software-based version showing both the functions of the application executing unit 106 which serves as the nucleus which executes the application binary, and the functions of the terminal controlling unit 107, and an API which the application can use is defined for each version number. Each of the available services 402 is information which defines a service which the client terminal 100 can identify and control, and is comprised the following pieces of information.

The service name of each of the available services 402 is set to the service name 403. The decodable content format 404 of each of the available services shows a format which can be decoded by the client terminal 100 when using a content delivery service. The number of simultaneous decode 405 is information showing how many maximum pieces of information in the format defined by the content format 404 the client terminal 100 can decode simultaneously.

Next, results of the matching process will be explained.

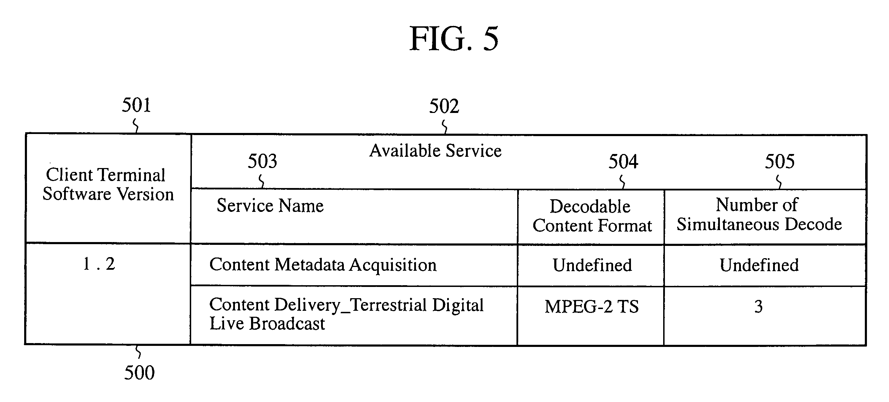

Fig. 5 is a figure showing an example of the application acquiring condition which is acquired as results of the matching process performed by the terminal capability matching unit. The terminal capability matching unit 102 acquires the application acquiring condition 500 as shown in Fig. 5 by, in step ST204, comparing the services 306 with the client terminal capability 400 and then carrying out the matching process. This application acquiring condition adds constraints to the execution of an application.

The application acquiring condition 500 shown in Fig. 5 is comprised of a plurality of pieces of information about the following items: a client terminal software version 501 and available services 502. Each of the available services 502 is comprised of the following pieces of information: a service name 503, a decodable content format 504, and a number of simultaneous decode 505. In the example of Fig. 5, it is detected as results of the matching process that the two following services, except the BS digital broadcasting live distribution, among the services 306 included in the terminal information are available.

(1a) Content metadata acquisition

(2a) Contents distribution_terrestrial digital live broadcast

In particular, because, as to the "content delivery_terrestrial digital live broadcast" service, the client terminal can use two services from the DVD recorder whose terminal number 301 is "1" and the client terminal can also use one service from the PC placed in a study room whose terminal number 301 is "2", and hence the client terminal can use three services in total, the number of simultaneous decode 505 is described as "3". More specifically, it is detected that the client terminal 100 can simultaneously decode three streams acquired from the "content delivery_terrestrial digital live broadcast" service.

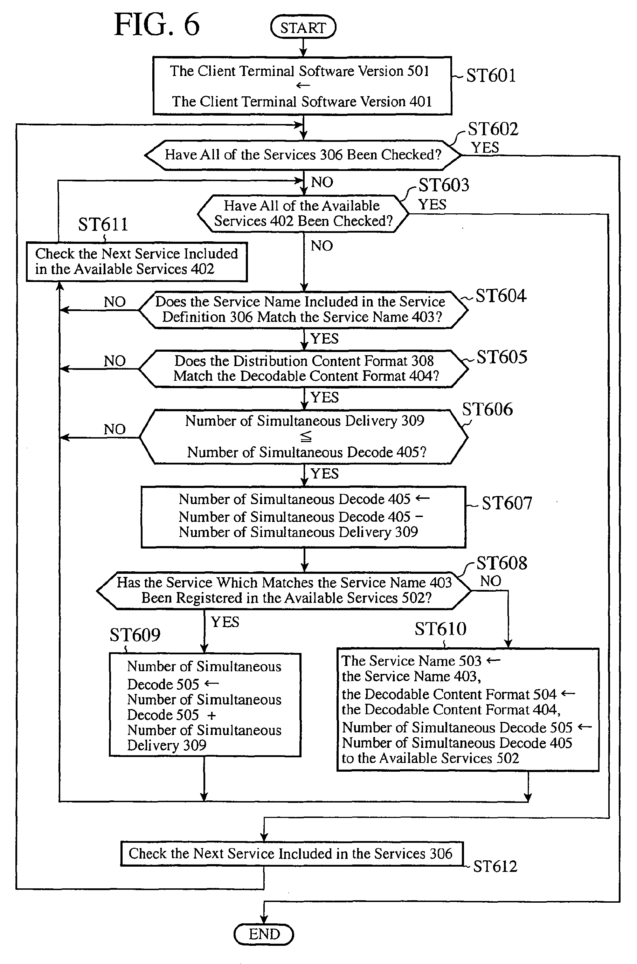

Hereafter, the terminal capability matching process carried out in step ST204 will be described in detail with reference to a flow chart of Fig. 6. Furthermore, how to determine the application acquiring condition 500 from both the pieces of information about the services 306 which are acquired from the terminals and the client terminal capability 400 indicating the capability of the client terminal 100 will be concretely described.

First, the terminal capability matching unit 102 registers the setting information about the client terminal software version 401 (version 1.2 in the example of Fig. 4) as the client terminal software version 501 (step ST601). Next, the terminal capability matching unit checks each of the services 306 in order. After checking all of the services 306, the terminal capability matching unit ends the process (step ST602). As to each selected one of the services 306, the terminal capability matching unit checks each of the services included in the available services 402.

When the terminal capability matching unit completes the checking of each of the services included in the available services 402 as to a selected one of the services 306, the terminal capability matching unit advances to a process of step ST612 in order to check the next one of the services 306 (step ST603).

When there is a service which remains to be checked in the available services 402, the terminal capability matching unit then checks to see whether the service name included in the service definition 306 matches the service name 403 (step ST604). When the service name included in the service definition 306 does not match the service name 403, the terminal capability matching unit 102 advances to a process of step ST611 in order to check the next available service 402, whereas when the service name included in the service definition 306 matches the service name 403, the terminal capability matching unit advances to a process of step ST605.

The terminal capability matching unit 102, in step ST605, checks to see whether the distribution content format 308 matches the decodable content format 404. At this time, when the distribution content format 308 does not match the decodable content format 404, the terminal capability matching unit advances to the process of step ST611. In contrast, when the distribution content format 308 matches the decodable content format 404, the terminal capability matching unit judges whether or not the following relationship is satisfied: the numerical value set to the number of simultaneous delivery 309 is equal to or smaller than the numerical value set to the number of simultaneous decode 405 (step ST606).

When the judgment of step ST606 shows that the above-mentioned relationship is not satisfied, the terminal capability matching unit advances to the process of step ST611. In contrast, when the above-mentioned relationship is satisfied, the terminal capability matching unit 102 judges that the client terminal 100 can control the service and has the capability of being able to decode the deliverable content format, and then advances to a process of step ST607.

In step ST607, the terminal capability matching unit 102 updates the number of simultaneous decode 405 according to the following equation (1), and manages information indicating that a decoding capability corresponding to the numerical value set to the number of simultaneous delivery 309 is assigned to the client terminal 100.

$$\text{The number of simultaneous decode 405} \leftarrow \text{the number of simultaneous decode 405} - \text{the number of simultaneous delivery 309} \qquad \ldots \quad (1)$$

Next, the terminal capability matching unit checks whether the service of the service name 403 which the terminal capability matching unit is currently trying to register has been registered into the available services 502 (step ST608). At this time, when the service of the service name 403 which the terminal capability matching unit is currently trying to register has been registered into the available services 502, the terminal capability matching unit adds the numerical value set to the number of simultaneous delivery 309, for which matching has been newly established, to the number of simultaneous decode 505 which is registered in advance according to the following equation (2) to update the number of simultaneous decode 505 (step ST609).

$$\text{The number of simultaneous decode 505} \leftarrow \text{the number of simultaneous decode 505} + \text{the number of simultaneous delivery 309} \qquad \ldots \quad (2)$$

In contrast, when the service of the service name 403 which the terminal capability matching unit is currently trying to register has not been registered into the available services 502, the terminal capability matching unit 102 registers the service name 403, the decodable content format 404, and the number of simultaneous decode 405, as the service name 503, the decodable content format 504, and the number of simultaneous decode 505, into the available services, respectively (step ST610). When completing the process of step ST609 or step ST610, the terminal capability matching unit advances to the process of step ST611 to check the next available service.

Although the above-mentioned terminal capability matching process is explained by taking, as an example, a case in which steaming delivery of a video content is carried out and the video content stream delivered is decoded, the terminal capability matching process is not necessarily limited to this example. For example, matching between a service which each on-premise terminal provides for general purpose use and the capability of the client terminal 100, such as matching between a service for distributing an image or music content and the decoding capability of the client terminal 100, matching between a service for distributing a game content and the game execution capability of the client terminal 100, or matching between a service for distributing a mail and the e-mail reception capability of the client terminal 100, can be alternatively established.

The terminal capability matching unit 102 informs the application acquiring condition 500, which the terminal capability matching unit has acquired by performing the terminal capability matching process of step ST204, as mentioned above in detail, to the application meta information acquiring unit 103 (step ST205).

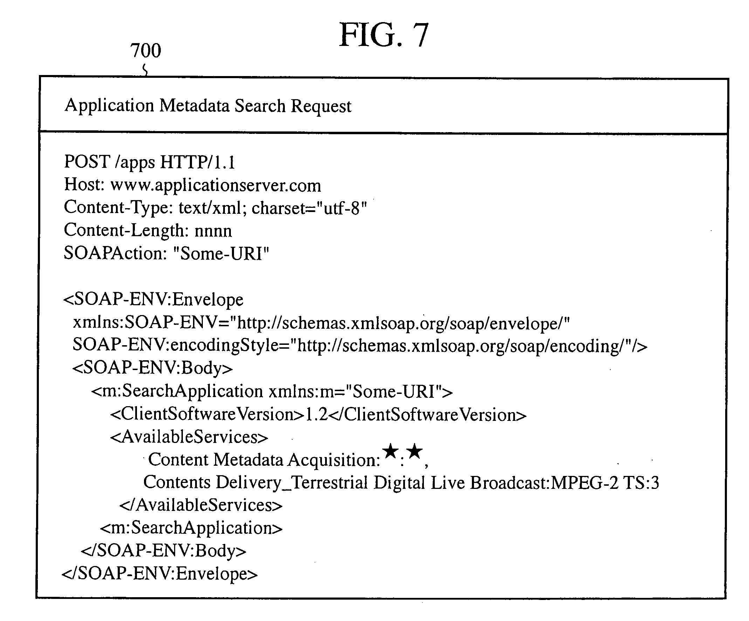

The application meta information acquiring unit 103 then makes a request of the application meta information searching unit 141 of the application providing server 140 for acquisition of application meta information which matches the application acquiring condition 500 (step ST206). Fig. 7 is a figure showing an example of a request for examination of application metadata which is, in step ST206, transmitted to the application providing server 140. In the example of Fig. 7, the application acquiring condition 500 is formed as an XML (extensible Markup Language) document in a data format according to SOAP (Simple Object Access Protocol).

The client terminal software version 501 is shown in a portion enclosed by the tag name of "ClientSoftware-Version" shown in Fig. 7, and the available services 502 are shown in a portion enclosed by the tag name of "AvailableServices" shown in Fig. 7. The service name 503, the decodable content format 504, and the number of simultaneous decode 504, which are the components of each of the available services 502 are expressed as a character string shown in a portion enclosed by the tag name "AvailableServices" shown in Fig. 7 and divided into their respective parts separated by a colon ":". Furthermore, undefined information is expressed as "*".

The application meta information searching unit 141, which is included in the application providing server 140 which has received a request 700 to search for application meta information, analyzes the XML document included in the application meta information search request 700 received from the client terminal 100 first so as to extract the application acquiring condition 500. The application meta information searching unit 141 then transmits a request for acquisition of application meta information to the application storage unit 143 so as to make a request for the meta information about applications managed by the application providing server 140 (step ST207).

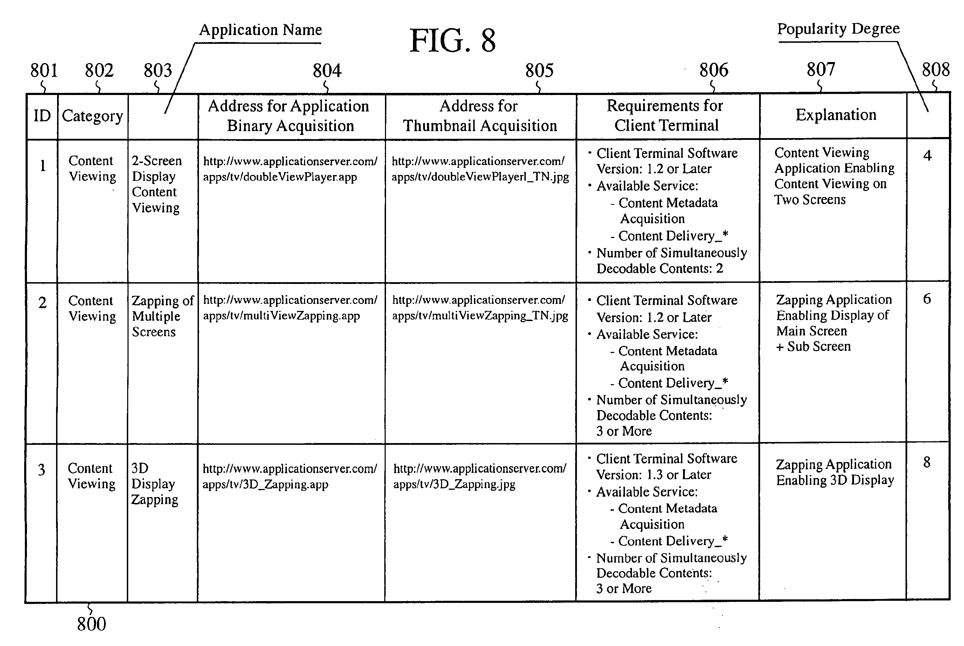

The application storage unit 143 transmits a part or all of the pieces of application meta information which the application storage unit manages to the application meta information searching unit 141 according to the description of the request from the application meta information searching unit 141 (step ST208). The application meta information searching unit 141 then searches for the application meta information by using the application acquiring condition 500 which the application meta information searching unit has extracted (step ST209), and then acquires pieces of application meta information 800 as shown in Fig. 8.

Each of the pieces of application meta information shown in Fig. 8 is comprised of a plurality of pieces of information about the following items: an ID 801, a category 802, an application name 803, an address 804 for acquisition of an application binary, an address 805 for acquisition of a thumbnail, requirements 806 for client terminal, an explanation 807, and a popularity degree 808.

The ID 801 is an ID inherent to each application meta information for identifying each application meta information. Information indicating a category to which an application belongs is set to the category 802 of the application. The application name 803 of an application shows an application name set to the application. An address on the network for acquiring the application binary of an application is set to the address 804 for acquisition of the application binary of the application. The address 805 for acquisition of a thumbnail of an application indicates an address on the network of a small image which enables reference to a GUI image of the application.

Requirements which are needed on the client terminal 100 when the client terminal 100 makes an application run are set to the requirements 806 for client terminal of the application. An explanation about an application is set to the explanation 807 of the application. The popularity degree 808 of an application indicates a popularity degree which the application providing server 140 has assigned to the application uniquely on the basis of the number of times that the application has been downloaded, or the like.

The application meta information searching unit, in step ST209, performs the searching process based on the application metadata search request 700 shown in Fig. 7 while aiming at the information described in the requirements 806 for client terminal. "Contents distribution_*" which is one of the available services described in the requirements 806 for client terminal shows that any service satisfies the requirements as long as it is a content delivery service. For example, it is judged that in a case of any content delivery service, such as a content delivery_terrestrial digital live broadcast, a content delivery_BS digital live broadcast, or a content delivery_stored content, there is a match when performing the searching process.

Although the example of searching for application meta information by using the application meta information acquiring condition 500 as a search key and by defining the requirements 806 for client terminal as the target to be searched for is shown above, it is not necessary to necessarily define only the requirements 806 for client terminal as the target to be searched for, and the user can be allowed to specify any one of the following pieces of information (1b), (2b), and (3b), which the user desires explicitly, so as to include the information in the application metadata search request 700.

(1b) The category of the application
(2b) Arbitrary keywords
(3b) A popularity degree

In this case, the application meta information searching unit 141 performs the searching process while defining the category 802, the application name 803, the explanation 807, or the popularity degree 808 in the application meta information 800 as the target to be searched for. As an alternative, the application meta information searching unit similarly manages, as the application meta information 800, a service provided by the information providing server 150 which the application binary of each application refers to at the time when the application binary is executed, and allows the user to specify the service and then performs the searching process.

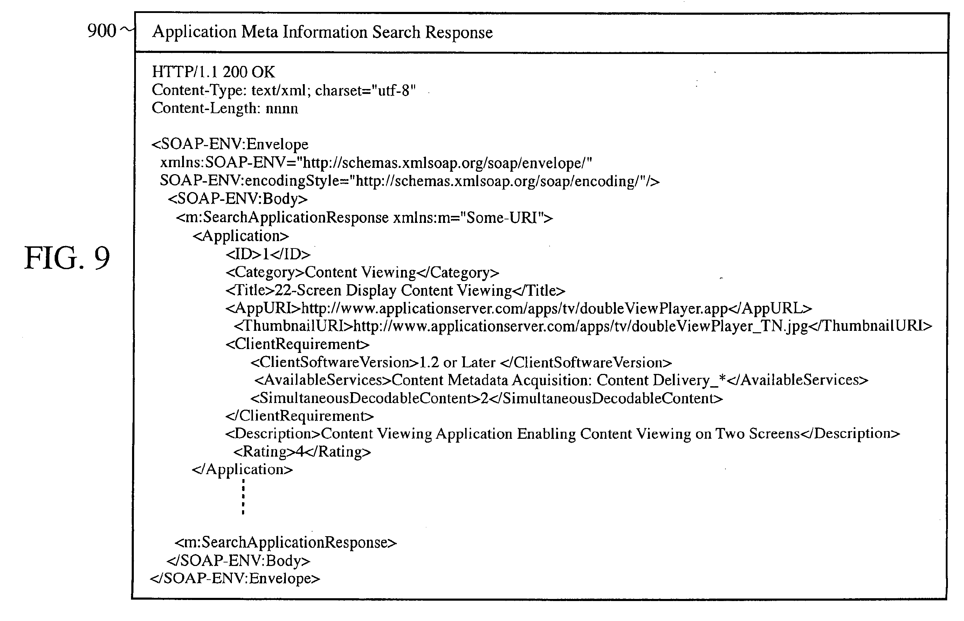

The application meta information 800 which is searched for is formed into an XML document, as an application metadata search response 900 as shown in Fig. 9, by the application meta information searching unit 141, and the XML document is transmitted, as a response to the request to search for application meta information, to the application meta information acquiring unit 103 of the client terminal 100 (step ST210).

When receiving the application meta information search response, the application meta information acquiring unit 103 analyzes the application meta information search response 900 which the application meta information acquiring unit has received as the XML document, and extracts the application meta information 800 from the application meta information search response and stores the application meta information therein. Hereafter, it is assumed that the application meta information 800 which is the result of the search made by the application meta information searching unit 141 can be completely reconstructed by the application meta information acquiring unit 103, and the meta information which the application meta information acquiring unit 103 has acquired and stored therein can be also referred to as the application meta information 800. The application meta information acquiring unit 103 notifies the application selecting unit 104, as well as the application meta information 800, that the application meta information acquiring unit has acquired the application meta information 800 (step ST211).

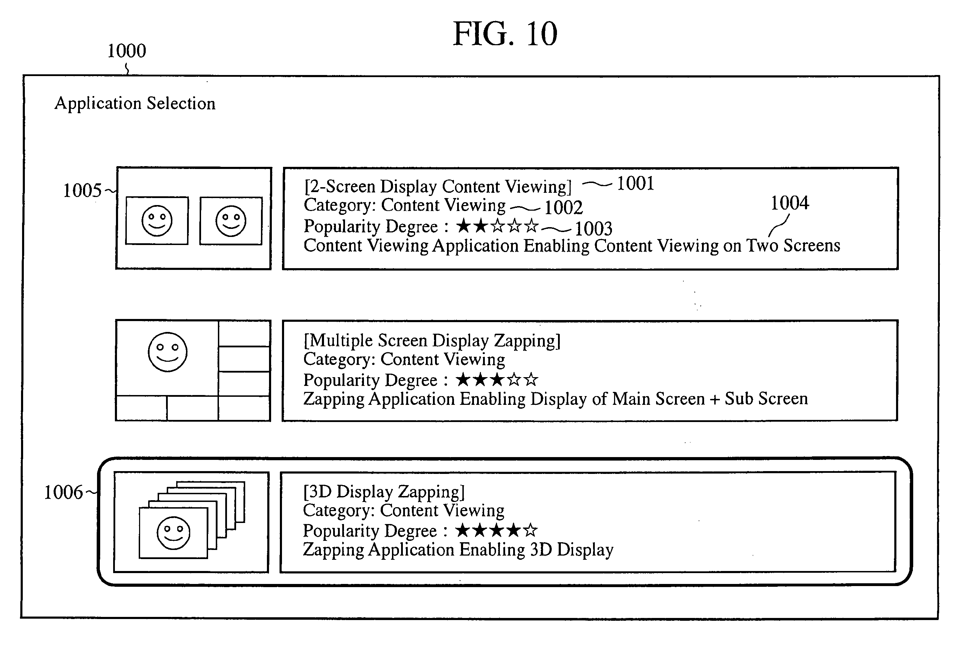

The application selecting unit 104 forms a GUI screen display for application selection from the application meta information 800. Fig. 10 is a figure showing an example of the GUI screen display for application selection. As shown in Fig. 10, an application name 1001, a category 1002, a display of stars 1003, an explanation 1004, a thumbnail 1005, and a cursor 1006 are displayed for each application in the GUI screen display 1000 for application selection.

In this case, as the application name 1001, information acquired from the application name 803 is displayed. Information acquired from the category 802 is displayed in the category 1002. In the display of stars 1003, a popularity degree of each application which is set up on the basis of information acquired from the popularity degree 808 is illustrated as a number of stars. The explanation 1004 shows information acquired from the explanation 807. The thumbnail 1005 is an image which the client terminal 100 acquires with reference to the address 805 for thumbnail acquisition. The cursor 1006 shows an application which is being selected by the user.

The user can select his or her favorite application while looking at an application list displayed plainly as shown in Fig. 10. When an application is selected by the user (step ST212), the application selecting unit 104 transmits a notification indicating the selection of the application, as well as the address 804 for acquisition of the application binary which corresponds to the selected application, to the application binary acquiring unit (step ST213).

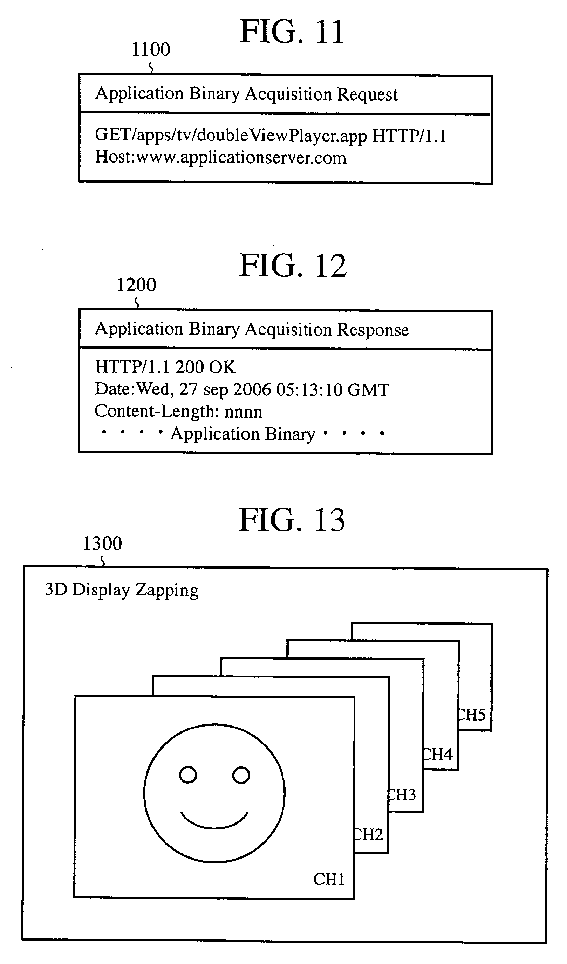

The application binary acquiring unit 105 generates a request 1100, as shown in Fig. 11, for acquisition of the application binary from the acquired address 804 for acquisition of the application binary, and transmits the request for acquisition of the application binary to the application providing server 140 (step ST214). When receiving the application binary acquisition request 1100, the application binary delivering unit 142 of the application providing server 140 analyzes the acquired application binary acquisition request 1100 to specify where the desired application binary is stored in the application storage unit 143, and then makes a request of the application storage unit 143 for the application binary (step ST215).

The application storage unit 143 refers to the application binary acquisition request transmitted thereto from the application binary delivering unit 142 so as to specify the application binary, and transmits the application binary to the application binary delivering unit 142 (step ST216). The application binary delivering unit 142 which has received the desired application binary forms, as a response to the application binary acquisition request received in step ST214, an application binary acquisition response 1200, as shown in Fig. 12, including the application binary, and transmits the application binary to the client terminal 100 (step ST217).

Although in the above-mentioned explanation the example in which the client terminal selects one application which the user has selected is shown, the user, in step ST212, can select a plurality of applications at a time, and the client terminal can repeat the processes of steps ST214 to step ST217 a number of times and then acquire the plurality of applications at a time.

The application binary acquiring unit 105 which has acquired the application binary which has been selected by user notifies the application executing unit 106, as well as the application binary, that the application binary acquiring unit has acquired the application binary (step ST218). The application executing unit 106 which has acquired the application binary executes the application binary (step ST219).

In a case in which the application binary is the one which produces a screen display, such as a GUI, the application executing unit starts a GUI screen as shown in, for example, Fig. 13. In a case in which the application is an application 1300 for zapping contents which can be displayed in a 3D form as shown in Fig. 13, the client terminal 100 receives a stream delivered thereto from a content delivery service provided by an on-premise terminal by way of the on-premise network 110, decodes the steam, and produces a screen display.

The user can handle the application by using a not-shown remote control. For example, in such a state as that moving images are currently being displayed in turn from the front side of the screen in order of CH1 (front side of screen) → CH2 → CH3 → CH4 → CH5 (rear side of screen) in the 3D display zapping application 1300, when the user pushes down, for example, a rightward button of the remote control, the alignment of the channels changes to the order of CH2 (front side of screen) → CH3 → CH4 → CH5 → CH1 (rear side of screen), whereas the user pushes down a leftward button of the remote control, the alignment of the channels changes to the order of CH5 (front side of screen) → CH1 → CH2 → CH3 → CH4 (rear side of screen), so that the 3D display zapping application can perform zapping.

In the application acquiring condition 500 shown in Fig. 5, it is specified, as a condition, that three streams in the MPEG-2 TS format which are delivered by a "content delivery_terrestrial digital live broadcast" service can be decoded simultaneously. Therefore, the results of searching for application meta information which are shown in the application meta information 800 shown in Fig. 8 satisfy the requirements 806 for client terminal of the 3D display zapping application 1300.

On the other hand, in the 3D display zapping application 1300 shown in Fig. 13, an example in which the five screen displays (CH1 to CH5) are decoded simultaneously is shown as an actually-started 3D display zapping application. In such a case, the application developer of the application can set up, as the requirements for client terminal, a minimum function which operates at a level which the application intends (e.g., simultaneous decoding of five screen displays), instead of setting up, as the requirements 806 for client terminal, a maximum function (simultaneous decoding of three screen displays) to which the application provided by the application developer corresponds, and the application executing unit 106 can acquire the application acquiring condition 500 from the terminal capability matching unit 102 and make settings for the application binary according to the capability of the client terminal 100.

The application executing unit 106 acquires and executes the application binary after the application meta information 800 is acquired and the client terminal software version 501 is specified. Accordingly, it is guaranteed that all the APIs which the application binary calls can be executed.

The application executing unit 106 makes a request of the terminal controlling unit 107 for control of the client terminal when performing a process to be limitedly applied to the interior of the client terminal 100, such as a transition of the GUI screen, in executing the application binary (step ST220). The terminal controlling unit 107 performs a process of controlling the client terminal 100 appropriately in response to this request (step ST221), and transmits the results of the process, as a control response, to the application executing unit 106 (step ST222).

Furthermore, when the client terminal uses a service described in the requirements 806 for client terminal of the application meta information 800, the application executing unit 106 transmits a service request to the on-premise terminal 120 (step ST223), and then acquires a response to the service request and uses the service (step ST224).

When the client terminal uses various services provided by the information providing server 150 in performing the application binary, the application executing unit 106 transmits a service request to the information providing server 150 (step ST225), and then acquires a response to the service request and uses the services (step ST226).

The following process steps (1c), (2c), and (3c) shown in Fig. 2 are actually carried out in a random order according to a procedure of the execution of the application binary, and those process steps do not necessarily be carried out in the order as shown in Fig. 2.

　　　(1c) Steps ST220 to ST222
　　　(2c) Steps ST223 and ST224
　　　(3c) Steps ST225 and ST226

As mentioned above, in accordance with this Embodiment 1, the user is enabled to make the client terminal 100 execute an application which uses services provided by the on-premise terminals 120 to 122 which are disposed distributedly on the on-premise network 110 by combining the services without making any troublesome settings. Furthermore, because the client terminal 100 selects the user's favorite application with reference to the meta information about the application which the application providing server 140 provides, and then executes the application after acquiring this application, the client terminal 100 can use an application having a new GUI and a new function at all times.

Embodiment 2.

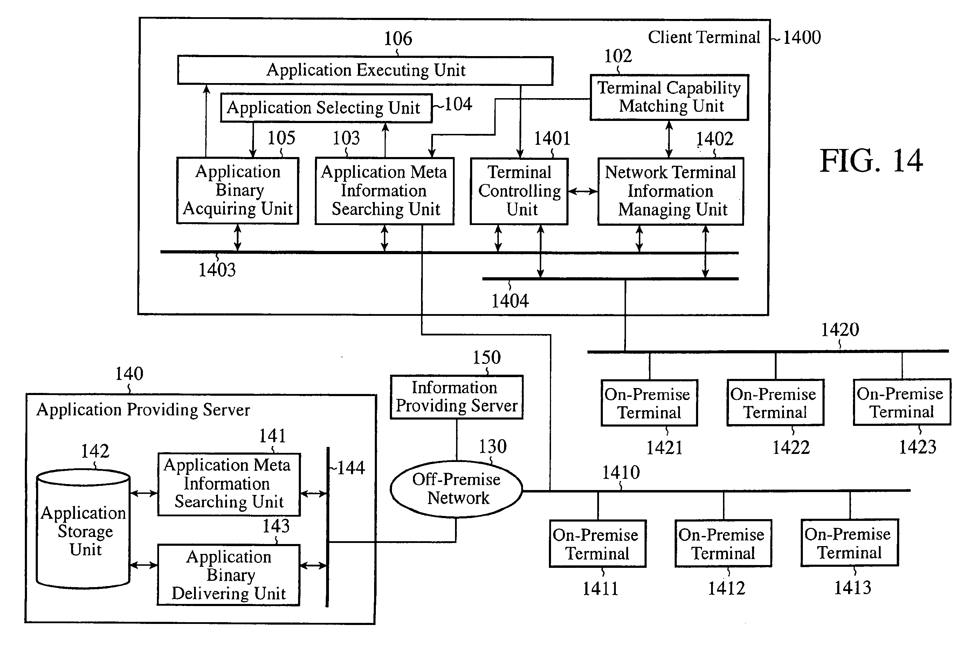

Fig. 14 is a block diagram showing the structure of an application providing system in accordance with Embodiment 2 of the present invention. In Fig. 14, the same components as those shown in Fig. 1 or like components are designated by the same reference numerals as those of Fig. 1, and the duplicated explanation of the components will be omitted hereafter. In the application providing system in accordance with Embodiment 2, a client terminal 1400 is connected to an on-premise network 1410 via a network IF 1403, and is connected to an on-premise network 1420 via a network IF 1404.

Communications are carried out according to a communications protocol A in the on-premise network 1410, and on-premise terminals 1411 to 1413 are connected to the on-premise network 1410. Communications are carried out according to a communications protocol B in the on-premise network 1420, and on-premise terminals 1421 to 1423 are connected to the on-premise network 1420.

The terminal controlling unit 1401 acquires the terminal information about each on-premise terminal connected to the on-premise network 1410 or 1420 from the network terminal information managing unit 1402, and selects an appropriate protocol to control each on-premise terminal. The network terminal information managing unit 1402 acquires and manages the terminal information about each on-premise terminal connected to the on-premise network 1410 or 1420.

The network IF 1403 interfaces between each of the terminal controlling unit 1401, the network terminal information managing unit 1402, an application meta information acquiring unit 103 and an application binary acquiring unit 105, and the party on the other end of communications when they communicate with each other via the on-premise network 1410. The network IF 1404 interfaces between each of the terminal controlling unit 701 and the network terminal information managing unit 1402, and the party on the other end of communications when they communicate with each other via the on-premise network 1420.

Next, the operation of the application providing system will be explained.

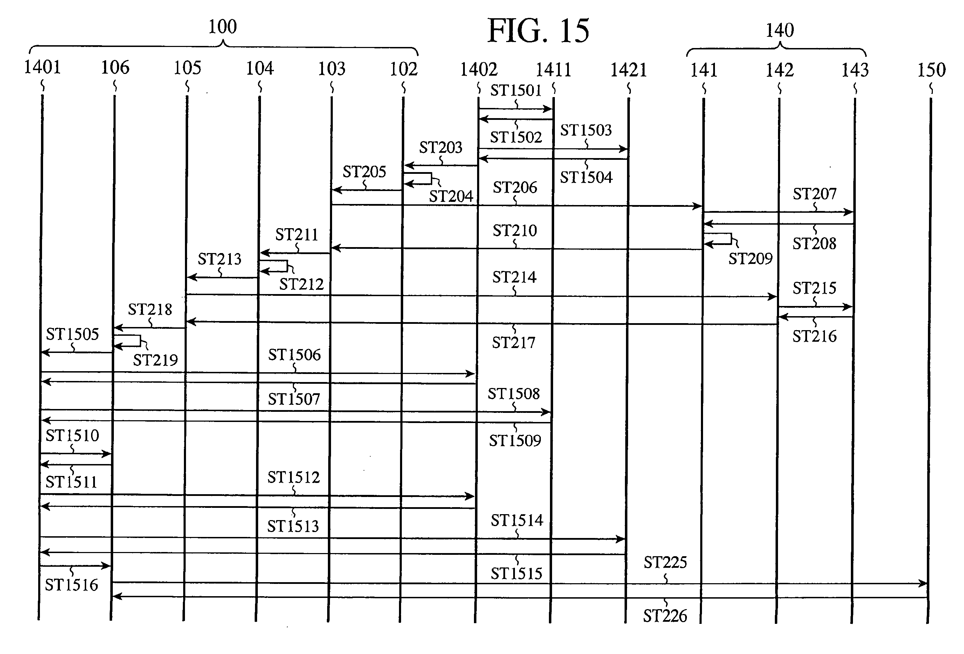

Fig. 15 is a sequence diagram showing a flow of the operation of the application providing system in accordance with Embodiment 2, and the operation of the application providing system will be explained with reference to this figure. The steps which are processed in the same way as that of above-mentioned Embodiment 1 are designated by the same reference characters, and the duplicated explanation of the steps will be omitted hereafter.

The network terminal information managing unit 1402 confirms whether there exists an on-premise terminal on the on-premise network 1410 or 1420 first, and transmits a request for acquisition of terminal information to an on-premise terminal the existence of which has been confirmed thereby (steps ST1501 and 1503).

As a method of confirming whether there exists an on-premise terminal on the on-premise network 1410 or 1420, the network terminal information managing unit uses a method of confirming whether there exists an on-premise terminal in response to a request from a user, a method of confirming whether there exists an on-premise terminal at regular time intervals, or a method of confirming whether there exists an on-premise terminal in response to an event notification indicating the existence of an on-premise terminal on the on-premise network 1410 or 1420 which the on-premise terminal has sent out.

In the example shown in Fig. 15, the network terminal information managing unit 1402 confirms the existence of the on-premise terminal 1411 first, transmits a request for acquisition of the terminal information to the on-premise terminal 1411 (step ST1501), and receives the terminal information from the on-premise terminal 1411 as a response to the request (step ST1502). After that, the network terminal information managing unit confirms the existence of the on-premise terminal 1421, transmits a request for acquisition of the terminal information to the on-premise terminal 1421 (step ST1503), and receives the terminal information from the on-premise terminal 1411 as a response to the request (step ST1504). In this case, the on-premise terminal 1411 and the on-premise terminal 1421 comply with different communications protocols, respectively, and, when the network terminal information managing unit 1402 acquires the pieces of terminal information about the on-premise terminals, the network terminal information managing unit uses the different communications protocols properly so as to communicate with the on-premise terminals.

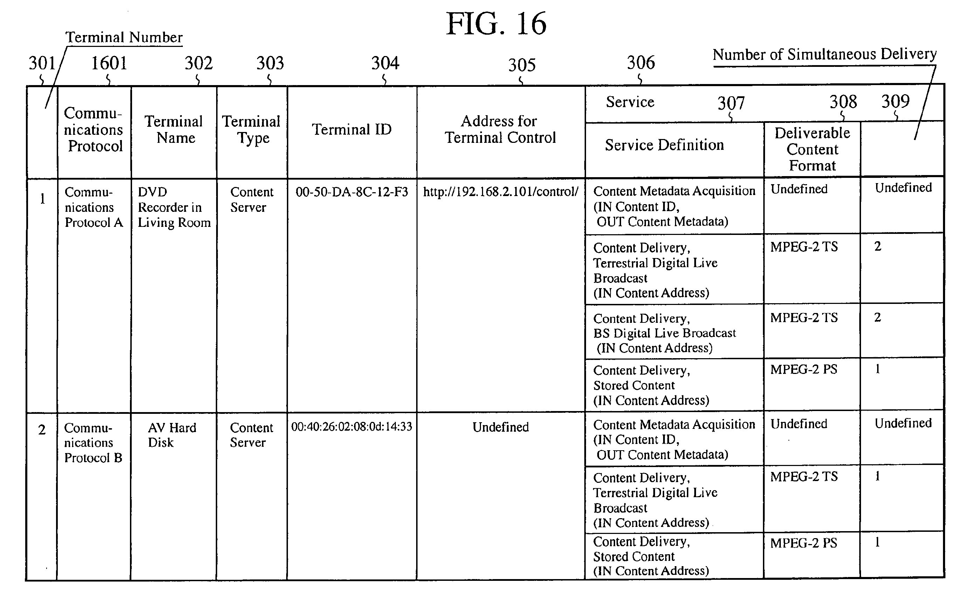

Fig. 16 is a figure showing examples of the terminal information of an on-premise terminal in accordance with Embodiment 2, and shows examples of the terminal information which the network terminal information managing unit 1402 acquires in the process of steps ST1502 and ST1504, respectively. As shown in Fig. 16, this terminal information is comprised of the following pieces of information: a terminal number 301, a communications protocol 1601, a terminal name 302, a terminal type 303, a terminal ID 304, an address 305 for terminal control, and services 306. The communications protocol with which the on-premise terminal which has provided the terminal information complies is set to the communications protocol 1601. Because the other pieces of information are the same as those shown in above-mentioned Embodiment 1, the explanation of them will be omitted hereafter.

In subsequent explanation, it is assumed that the terminal information whose terminal number 301 is "1" has been acquired from the on-premise terminal 1411, and the terminal information whose terminal number 301 is "2" has been acquired from the on-premise terminal 1421. Furthermore, after some pieces of information, among the services 306 which are the target for terminal capability matching by a terminal capability matching unit 102, including a service definition 307, a deliverable content format 308 and a number of simultaneous delivery 309 are converted to be able to be handled for general purpose use so that the terminal capability matching unit 102 can make a comparison in a sensible manner regardless of the difference between the communications protocols, the pieces of converted information are registered as the terminal information.

Because the processes of steps ST203 to ST219 shown in Fig. 15 are the same as those shown in above-mentioned Embodiment 1, the explanation of the processes will be omitted hereafter. The client terminal 100 communicates with the application providing server 140 via the on-premise network 1410 and carries out the same process as that shown in above-mentioned Embodiment 1 to acquire application meta information and an application binary.

When the application executing unit 106, in step ST219, executes the application binary, the application executing unit makes a request of the terminal controlling unit 1401 for performance of a process of using a service provided by an on-premise terminal on the on-premise network (step ST1505). The terminal controlling unit 1401 identifies the on-premise terminal to be controlled and makes a request of the network terminal information managing unit 1402 for acquisition of the terminal information about the on-premise terminal.

In the example of Fig. 15, a request to control the on-premise terminal 1411 has been made, and the terminal controlling unit 1401 makes a request of the network terminal information controlling unit 1402 for the terminal information about the on-premise terminal 1411 (step ST1506) and the terminal information about the on-premise terminal 1411 is transmitted to the terminal controlling unit 1401 as a response to the request (step ST1507). The terminal controlling unit 1401 acquires the information which is set to the communications protocol 1601 and which is included in the terminal information about the on-premise terminal 1411, recognizes that the communications protocol defining communications between the terminal controlling unit 1401 and the on-premise terminal 1411 is the communications protocol A, and then makes a request of the on-premise terminal 1411 for a service according to this communications protocol A (step ST1508).

The on-premise terminal 1411 transmits a service response to the client terminal according to the communications protocol A (step ST1509). The terminal controlling unit 1401 converts the service response which the client terminal has received according to the communications protocol A into information in a general-purpose format which is predetermined so that an application being executed can understand the information, and outputs the information to the application executing unit 106 as a terminal control response (step ST1510).

Also in performing each of processes of steps ST1511 to ST1516 shown in Fig. 15, the client terminal makes a service request of the on-premise terminal 1421 and receives a response transmitted from the on-premise terminal 1421 by carrying out communications with the on-premise terminal 1421 according to the communication protocol B in the same way as that mentioned above. Because processes of steps ST225 and ST226 are the same as those of above-mentioned Embodiment 1, the explanation of the processes will be omitted hereafter.

As mentioned above, in accordance with this Embodiment 2, even in a case in which a plurality of different on-premise terminals which carry out communications according to different communications protocols are connected to the client terminal 100 managed by the user, the registration of the corresponding communications protocol as the terminal information about each of the plurality of on-premise terminals enables the client terminal 100 to receive provision of a service from an on-premise terminal via communications according to the difference among the communications protocols. Accordingly, the user can execute an application which combines and uses services provided by different on-premise terminals without concern for the difference among the communications protocols. Furthermore, because the developer of such an application does not have to develop different applications intended for the different communications protocols separately, the developer can develop the application efficiently.

Industrial Applicability

As mentioned above, because the application providing system in accordance with the present invention can easily select an application and a user interface by using the functions of each terminal on a network and can execute them in the client terminal which the user manages, the application providing system in accordance with the present invention is suitable for use as a system in which a client terminal executes an application in cooperation with a terminal on an external network, such as a portal site for television.

**Claims**

1. A client terminal comprising:

   a network terminal information managing unit for acquiring and managing terminal information including information for defining a service provided by an on-premise terminal connected to an on-premise network from said on-premise terminal;
   a terminal capability matching unit for comparing information for defining a service processing capability of said client terminal itself with the terminal information which is acquired from said on-premise terminal by said network terminal information managing unit so as to, from these pieces of information, extract an acquiring condition for acquiring an application which is executed when using the service provided by said on-premise terminal on said client terminal itself;
   an application meta information acquiring unit for acquiring meta information about said application from an application providing server on an off-premise network on a basis of the application acquiring condition extracted by said terminal capability matching unit;
   an application selecting unit for presenting the meta information acquired by said application meta information acquiring unit to a user, and for accepting a selection of an application from the user; and
   an application binary acquiring unit for acquiring a main part of the application specified by said application selecting unit from said application providing server on said off-premise network.

2. The client terminal according to claim 1, **characterized in that** an application executing unit for executing the application binary acquired by application binary acquiring unit, and a terminal controlling unit for controlling both the operation of executing the application by the client terminal itself, and the provision of the service by the on-premise terminal according to an instruction from said application executing unit.

3. The client terminal according to claim 1, **characterized in that** the application meta information acquiring unit acquires, as the application acquiring condition for acquiring an application, information including a category of said application, an arbitrary keyword, a popularity degree, and a combination of services which are provided from the information providing server connected to the off-premise network when executing said application from the terminal capability matching unit, and acquires the meta information about said application from the application providing server on a basis of said application acquiring condition.

4. The client terminal according to claim 2, **characterized in that** when the client terminal is connected to a plurality of different on-premise terminals with which the client terminal carries out communications according to different communications protocols, the network terminal information managing unit registers, in the terminal information about each of said on-premise terminals, identification information about an identification of a communications protocol corresponding to said each on-premise terminal, and manages the identification information, and the terminal controlling unit acquires the identification information about a communications protocol corresponding to an on-premise terminal to be controlled from said network terminal information managing unit, and converts an instruction from the application executing unit into data having a format according to said communications protocol and transmits said data so as to control a service provision by said on-premise terminal.

5.  An application providing server comprising:

an application storage unit for storing and managing both a main part of an application meta information about said application while bringing said meta information into correspondence with said application binary;
an application meta information searching unit for, on a basis of an acquiring condition for acquiring an application which is notified from a client terminal, searching through said application storage unit for meta information which satisfies said acquiring condition, and for delivering the meta information which satisfies said acquiring condition to said client terminal; and
an application binary delivering unit for acquiring an application binary which said client terminal has made a request to acquire from said application storage unit, and for delivering the application binary to the client terminal which is the source of the request.

6.  An application providing system comprising:

the client terminal according to claim 1; and
an application providing server including an application storage unit for storing and managing both a main part of an application meta information about said application while bringing said meta information into correspondence with said application binary, an application meta information searching unit for, on a basis of an acquiring condition for acquiring an application which is notified from said client terminal, searching through said application storage unit for meta information which satisfies said acquiring condition, and for delivering the meta information which satisfies said acquiring condition to said client terminal, and an application binary delivering unit for acquiring an application binary which said client terminal has made a request to acquire from said application storage unit, and for delivering the application binary to the client terminal which is the source of the request.

FIG. 1

**Client Terminal** ~100

106

**Application Executing Unit**

102

**Application Selecting Unit** ~104

**Terminal Capability Matching Unit**

105

**Application Binary Acquiring Unit**

103

**Application Meta Information Searching Unit**

107

**Terminal Controlling Unit**

101

**Network Terminal Information Managing Unit**

108

140

**Application Providing Server**

142

**Application Storage Unit**

141

**Application Meta Information Searching Unit**

~144

143

**Application Binary Delivering Unit**

**Information Providing Server** ~150

130

**Off-Premise Network**

110

**On-Premise Terminal**

120

**On-Premise Terminal**

121

**On-Premise Terminal**

122

EP 2 105 839 A1

FIG. 2

100

140

107  106  105  104  103  102   101  120   141  142  143   150

ST201

ST202

ST203

ST204

ST205

ST206

ST207

ST208

ST209

ST210

ST211

ST212

ST213

ST214

ST215

ST216

ST217

ST218

ST219

ST220

ST221

ST222

ST223

ST224

ST225

ST226

EP 2 105 839 A1

# FIG. 3

| Terminal Number (301) | Terminal Name (302) | Terminal Type (303) | Terminal ID (304) | Address for Terminal Control (305) | Service (306) | | |
|---|---|---|---|---|---|---|---|
| | | | | | Service Definition (307) | Deliverable Content Format (308) | Number of Simultaneous Delivery (309) |
| 1 | DVD Recorder in Living Room | Content Server | 00-50-DA-8C-12-F3 | http://192.168.2.101/control/ | Content Metadata Acquisition (IN Content ID, OUT Content Metadata) | Undefined | Undefined |
| | | | | | Content Delivery_Terrestrial Digital Live Broadcast (IN Content Address) | MPEG-2 TS | 2 |
| | | | | | Content Delivery_BS Digital Live Broadcast (IN Content Address) | MPEG-2 TS | 2 |
| | | | | | Content Delivery_Stored Content (IN Content Address) | MPEG-2 PS | 1 |
| 2 | PC in Study Room | Content Server | 00-0D-6B-0C-07-E1 | http://192.168.2.102/control/ | Content Metadata Acquisition (IN Content ID, OUT Content Metadata) | Undefined | Undefined |
| | | | | | Content Delivery_Terrestrial Digital Live Broadcast (IN Content Address) | MPEG-2 TS | 1 |
| | | | | | Content Delivery_Stored Content (IN Content Address) | MPEG-2 PS | 1 |

EP 2 105 839 A1

# FIG. 4

EP 2 105 839 A1

| Client Terminal Software Version | Available Service | | |
| --- | --- | --- | --- |
| | Service Name | Decodable Content Format | Number of Simultaneous Decode |
| 1 . 2 | Content Metadata Acquisition | Undefined | Undefined |
| | Content Delivery_Terrestrial Digital Live Broadcast | MPEG-2 TS | 3 |
| | Content Printing | JPEG | 1 |
| | Content Upload | Undefined | Undefined |

401  402  403  404  405

400

# FIG. 5

EP 2 105 839 A1

| Client Terminal Software Version | Available Service | | |
|---|---|---|---|
| | Service Name | Decodable Content Format | Number of Simultaneous Decode |
| 1 . 2 | Content Metadata Acquisition | Undefined | Undefined |
| | Content Delivery_Terrestrial Digital Live Broadcast | MPEG-2 TS | 3 |

**FIG. 6**

$\boxed{\text{START}}$

The Client Terminal Software Version 501
←
The Client Terminal Software Version 401 — ST601

Have All of the Services 306 Been Checked? — ST602 — YES

NO — ST603

Have All of the Available Services 402 Been Checked? — YES

ST611

Check the Next Service Included in the Available Services 402

NO

Does the Service Name Included in the Service Definition 306 Match the Service Name 403? — ST604

NO — YES

Does the Distribution Content Format 308 Match the Decodable Content Format 404? — ST605

NO — YES

Number of Simultaneous Delivery 309 $\leqq$ Number of Simultaneous Decode 405? — ST606

NO — YES

Number of Simultaneous Decode 405 ← Number of Simultaneous Decode 405 − Number of Simultaneous Delivery 309 — ST607

Has the Service Which Matches the Service Name 403 Been Registered in the Available Services 502? — ST608 — NO

YES

ST609

Number of Simultaneous Decode 505 ← Number of Simultaneous Decode 505 + Number of Simultaneous Delivery 309

ST610

The Service Name 503 ← the Service Name 403, the Decodable Content Format 504 ← the Decodable Content Format 404, Number of Simultaneous Decode 505 ← Number of Simultaneous Decode 405 to the Available Services 502

Check the Next Service Included in the Services 306 — ST612

$\boxed{\text{END}}$

# FIG. 7

700

Application Metadata Search Request

POST /apps HTTP/1.1
Host: www.applicationserver.com
Content-Type: text/xml; charset="utf-8"
Content-Length: nnnn
SOAPAction: "Some-URI"

<SOAP-ENV:Envelope
  xmlns:SOAP-ENV="http://schemas.xmlsoap.org/soap/envelope/"
  SOAP-ENV:encodingStyle="http://schemas.xmlsoap.org/soap/encoding/"/>
  <SOAP-ENV:Body>
    <m:SearchApplication xmlns:m="Some-URI">
      <ClientSoftwareVersion>1.2</ClientSoftwareVersion>
      <AvailableServices>
        Content Metadata Acquisition: ★:★,
          Contents Delivery_Terrestrial Digital Live Broadcast:MPEG-2 TS:3
      </AvailableServices>
    <m:SearchApplication>
  </SOAP-ENV:Body>
</SOAP-ENV:Envelope>

EP 2 105 839 A1

# FIG. 8

| | | Application Name | | | | Popularity Degree | |
|---|---|---|---|---|---|---|---|
| 801 | 802 | 803 | 804 | 805 | 806 | 807 | 808 |
| ID | Category | | Address for Application Binary Acquisition | Address for Thumbnail Acquisition | Requirements for Client Terminal | Explanation | |
| 1 | Content Viewing | 2-Screen Display Content Viewing | http://www.applicationserver.com/ apps/tv/doubleViewPlayer.app | http://www.applicationserver.com/ apps/tv/doubleViewPlayerl_TN.jpg | • Client Terminal Software Version: 1.2 or Later<br>• Available Service:<br>  - Content Metadata Acquisition<br>  - Content Delivery_*<br>• Number of Simultaneously Decodable Contents: 2 | Content Viewing Application Enabling Content Viewing on Two Screens | 4 |
| 2 | Content Viewing | Zapping of Multiple Screens | http://www.applicationserver.com/ apps/tv/multiViewZapping.app | http://www.applicationserver.com/ apps/tv/multiViewZapping_TN.jpg | • Client Terminal Software Version: 1.2 or Later<br>• Available Service:<br>  - Content Metadata Acquisition<br>  - Content Delivery_*<br>• Number of Simultaneously Decodable Contents: 3 or More | Zapping Application Enabling Display of Main Screen + Sub Screen | 6 |
| 3 | Content Viewing | 3D Display Zapping | http://www.applicationserver.com/ apps/tv/3D_Zapping.app | http://www.applicationserver.com/ apps/tv/3D_Zapping.jpg | • Client Terminal Software Version: 1.3 or Later<br>• Available Service:<br>  - Content Metadata Acquisition<br>  - Content Delivery_*<br>• Number of Simultaneously Decodable Contents: 3 or More | Zapping Application Enabling 3D Display | 8 |

800

FIG. 9

900 ~| Application Meta Information Search Response

```
HTTP/1.1 200 OK
Content-Type: text/xml; charset="utf-8"
Content-Length: nnnn

<SOAP-ENV:Envelope
  xmlns:SOAP-ENV="http://schemas.xmlsoap.org/soap/envelope/"
  SOAP-ENV:encodingStyle="http://schemas.xmlsoap.org/soap/encoding/"/>
   <SOAP-ENV:Body>
     <m:SearchApplicationResponse xmlns:m="Some-URI">
       <Application>
            <ID>1</ID>
            <Category>Content Viewing</Category>
            <Title>22-Screen Display Content Viewing</Title>
            <AppURI>http://www.applicationserver.com/apps/tv/doubleViewPlayer.app</AppURL>
              <ThumbnailURI>http://www.applicationserver.com/apps/tv/doubleViewPlayer_TN.jpg</ThumbnailURI>
            <ClientRequirement>
                <ClientSoftwareVersion>1.2 or Later </ClientSoftwareVersion>
                 <AvailableServices>Content Metadata Acquisition: Content Delivery_*</AvailableServices>
                 <SimultaneousDecodableContent>2</SimultaneousDecodableContent>
            </ClientRequirement>
            <Description>Content Viewing Application Enabling Content Viewing on Two Screens</Description>
              <Rating>4</Rating>
       </Application>
              :
              :
              :

   <m:SearchApplicationResponse>
   </SOAP-ENV:Body>
</SOAP-ENV:Envelope>
```

EP 2 105 839 A1

# FIG. 10

Application Selection

1005 ~

[2-Screen Display Content Viewing] ~ 1001
Category: Content Viewing ~ 1002          1004
Popularity Degree : ★★☆☆☆ ~ 1003
Content Viewing Application Enabling Content Viewing on Two Screens

[Multiple Screen Display Zapping]
Category: Content Viewing
Popularity Degree : ★★★☆☆
Zapping Application Enabling Display of Main Screen + Sub Screen

1006 ~

[3D Display Zapping]
Category: Content Viewing
Popularity Degree : ★★★★☆
Zapping Application Enabling 3D Display

EP 2 105 839 A1

# FIG. 11

1100

| Application Binary Acquisition Request |
|---|
| GET/apps/tv/doubleViewPlayer.app HTTP/1.1<br>Host:www.applicationserver.com |

# FIG. 12

1200

| Application Binary Acquisition Response |
|---|
| HTTP/1.1 200 OK<br>Date:Wed, 27 sep 2006 05:13:10 GMT<br>Content-Length: nnnn<br>・ ・ ・ ・ Application Binary ・ ・ ・ ・ |

# FIG. 13

1300

3D Display Zapping

CH5
CH4
CH3
CH2
CH1

EP 2 105 839 A1

## FIG. 14

**Client Terminal** ~1400

106
Application Executing Unit

102
Terminal Capability Matching Unit

Application Selecting Unit ~104

105        103                    1401                1402
Application Binary Acquiring Unit | Application Meta Information Searching Unit | Terminal Controlling Unit | Network Terminal Information Managing Unit

1403

1404

140
**Application Providing Server**

142                    141
Application Storage Unit | Application Meta Information Searching Unit ~144

143
Application Binary Delivering Unit

150
Information Providing Server

130
Off-Premise Network

1420

On-Premise Terminal 1421

On-Premise Terminal 1422

On-Premise Terminal 1423

1410

On-Premise Terminal 1411

On-Premise Terminal 1412

On-Premise Terminal 1413

FIG. 15

# FIG. 16

| Terminal Number 301 | 1601 Communications Protocol | 302 Terminal Name | 303 Terminal Type | 304 Terminal ID | 305 Address for Terminal Control | 306 Service — Service Definition | 307 Deliverable Content Format | 308 309 Number of Simultaneous Delivery |
|---|---|---|---|---|---|---|---|---|
| 1 | Communications Protocol A | DVD Recorder in Living Room | Content Server | 00-50-DA-8C-12-F3 | http://192.168.2.101/control/ | Content Metadata Acquisition (IN Content ID, OUT Content Metadata) | Undefined | Undefined |
| | | | | | | Content Delivery, Terrestrial Digital Live Broadcast (IN Content Address) | MPEG-2 TS | 2 |
| | | | | | | Content Delivery, BS Digital Live Broadcast (IN Content Address) | MPEG-2 TS | 2 |
| | | | | | | Content Delivery, Stored Content (IN Content Address) | MPEG-2 PS | 1 |
| 2 | Communications Protocol B | AV Hard Disk | Content Server | 00:40:26:02:08:0d:14:33 | Undefined | Content Metadata Acquisition (IN Content ID, OUT Content Metadata) | Undefined | Undefined |
| | | | | | | Content Delivery, Terrestrial Digital Live Broadcast (IN Content Address) | MPEG-2 TS | 1 |
| | | | | | | Content Delivery, Stored Content (IN Content Address) | MPEG-2 PS | 1 |

## INTERNATIONAL SEARCH REPORT

| International application No. |
| --- |
| PCT/JP2007/050520 |

A. CLASSIFICATION OF SUBJECT MATTER
*G06F13/00(2006.01)i*

According to International Patent Classification (IPC) or to both national classification and IPC

B. FIELDS SEARCHED

Minimum documentation searched (classification system followed by classification symbols)
G06F13/00

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho  1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2005/066808 A1  (Matsushita Electric<br>Industrial Co., Ltd.),<br>21 July, 2005 (21.07.05),<br>Full text; Figs. 1 to 18<br>& EP 001705576 A | 1,2,5,6<br>3,4 |
| Y | JP 2005-311807 A  (Fuji Photo Film Co., Ltd.),<br>04 November, 2005 (04.11.05),<br>Full text; Figs. 1 to 8<br>(Family: none) | 3 |
| Y | JP 2004-133836 A  (Fuji Photo Film Co., Ltd.),<br>30 April, 2004 (30.04.04),<br>Full text; Figs. 1 to 4<br>(Family: none) | 3 |

☒ Further documents are listed in the continuation of Box C.　　　☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 April, 2007 (19.04.07) | Date of mailing of the international search report<br>    01 May, 2007 (01.05.07) |
| --- | --- |
| Name and mailing address of the ISA/<br>    Japanese Patent Office | Authorized officer |
| Facsimile No. | Telephone No. |

Form PCT/ISA/210 (second sheet) (April 2005)

28

**INTERNATIONAL SEARCH REPORT**

| | International application No. |
|---|---|
| | PCT/JP2007/050520 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-315066 A  (Toshiba Corp.),<br>25 October, 2002 (25.10.02),<br>Full text; Figs. 1 to 15<br>(Family: none) | 4 |

Form PCT/ISA/210 (continuation of second sheet) (April 2005)

**EP 2 105 839 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000332811 A